(19) **Europäisches Patentamt / European Patent Office / Office européen des brevets**

(11) **EP 4 424 636 A1**

(12) **EUROPEAN PATENT APPLICATION**
published in accordance with Art. 153(4) EPC

(43) Date of publication:
**04.09.2024 Bulletin 2024/36**

(21) Application number: **22886676.0**

(22) Date of filing: **11.10.2022**

(51) International Patent Classification (IPC):
**C01B 32/20** (2017.01)          **H01M 4/36** (2006.01)
**H01M 4/587** (2010.01)

(52) Cooperative Patent Classification (CPC):
**C01B 32/20; H01M 4/36; H01M 4/587;** Y02E 60/10

(86) International application number:
**PCT/JP2022/037832**

(87) International publication number:
**WO 2023/074346 (04.05.2023 Gazette 2023/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.10.2021   JP 2021176633**

(71) Applicant: **Mitsubishi Chemical Corporation**
**Chiyoda-ku**
**Tokyo 100-8251 (JP)**

(72) Inventors:
• **YOSHIDA, Hiroaki**
  **Tokyo 100-8251 (JP)**

• **HIRAHARA, Satoshi**
  **Tokyo 100-8251 (JP)**
• **ISHIWATARI, Nobuyuki**
  **Tokyo 100-8251 (JP)**
• **KONDO, Hisako**
  **Tokyo 100-8251 (JP)**
• **YUASA, Ryuto**
  **Tokyo 100-8251 (JP)**
• **YOKOMIZO, Masakazu**
  **Tokyo 100-8251 (JP)**

(74) Representative: **Vossius & Partner**
**Patentanwälte Rechtsanwälte mbB**
**Siebertstrasse 3**
**81675 München (DE)**

(54) **CARBON MATERIAL AND PRODUCTION METHOD THEREFOR, AND SECONDARY BATTERY AND MANUFACTURING METHOD THEREFOR**

(57)    An object of the present invention is to provide a carbon material that achieves both a high capacity retention rate and a low DCR retention rate even after 500 cycles, and a secondary battery using the same. The gist of the present invention is as follows. A carbon material wherein a number of peaks in the particle size distribution obtained from flow type-particle image analysis is 2 or more, a number of particles Ne calculated by the following formula (1) is 700 or more, and a specific surface area is 10 m²/g or less. A secondary battery including a positive electrode, a negative electrode, and an electrolyte, wherein the negative electrode comprises a current collector and a negative electrode active material layer disposed on the current collector, and wherein the negative electrode active material layer contains this carbon material.

$$Ne = No \times F \qquad (1)$$

(In formula (1), No is a number of particles of the carbon material obtained from the flow type-particle image analysis. F (%) is a particle frequency of the carbon material having a particle size of less than 3 um obtained from the flow type-particle image analysis.)

**EP 4 424 636 A1**

**Description**

Technical Field

The present invention relates to a carbon material that can be used as a negative electrode active material for a secondary battery and has excellent cycle characteristics and achieves both a high capacity retention rate and a low DCR retention rate even after 500 cycles, and a method for producing the same. The present invention also relates to a secondary battery using this carbon material as a negative electrode active material, and a method for manufacturing the same.

Background Art

In recent years, as electronic devices have become smaller, demand for high-capacity secondary batteries has increased. In particular, lithium-ion secondary batteries are attracting attention because they have higher energy density and superior high-current charging and discharging characteristics than nickel-cadmium batteries and nickel-hydrogen batteries.

Graphite materials and amorphous carbon are often used as negative electrode materials for lithium-ion secondary batteries due to their cost and durability. However, amorphous carbon materials have a small reversible capacity within the range of materials that can be put to practical use. When a density of an active material layer containing a negative electrode material is increased in order to increase the capacity, a irreversible charge/discharge capacity of graphite material during the initial cycle increases due to material destruction. As a result, high capacity can not achieved.

Patent Literature 1 discloses a negative electrode material for non-aqueous secondary batteries containing the following (A) and (B). The material is a negative electrode carbon material for non-aqueous secondary batteries that can further suppress reaction with electrolyte and provide non-aqueous secondary batteries with less deterioration during cycling. The material can produce high-capacity non-aqueous secondary batteries having less electrode expansion, less gas generation, and excellent charge/discharge rate characteristics.

Composite carbon material (A) being a pressure-treated carbon material (a) coated with a carbonaceous material or a graphite material

Carbon material (B) being at least one selected from natural graphite (C), artificial graphite (D), coated graphite (E) in which raw carbon material that has not been pressure treated is coated with carbonaceous material or graphite material, and amorphous carbon (F)

It is described in Patent literature 1 that the negative electrode material of Patent Literature 1 including the composite carbon material (A) and the specific carbon material (B) provides better battery characteristics without impairing the inherent battery characteristics of the composite carbon material (A).

[Prior Literature]

[Patent Literature]

[Patent Literature 1] JP 2013-201104 A

Summary of Invention

Technical Problem

Although the negative electrode material described in Patent Literature 1 has the effect of improving cycle characteristics to some extent, further improvement is required in the capacity retention rate and DCR retention rate after high cycles, for example, after 500 cycles.

An object of the present invention is to provide a carbon material that achieves both a high capacity retention rate and a low DCR retention rate even after 500 cycles, and a secondary battery using the same.

Solution to Problem

The present inventors have found that it is possible to achieve both a high capacity retention rate and a low DCR retention rate even after 500 cycles by using a carbon material wherein the specific surface area is 10 $m^2$/g or less, the number of peaks in the particle size distribution obtained from flow type-particle image analysis is 2 or more, and a value of Ne (numbers) is 700 or more, as a negative electrode active material of a secondary battery. The Ne value is calculated by multiplying the number of particles No (numbers) obtained from flow type-particle image analysis and the frequency F (%) of particles having a particle size of less than 3 μm obtained from flow type-particle image analysis.

The gist of the present invention is as follows.

[1] A carbon material wherein a number of peaks in the particle size distribution obtained from flow type-particle image analysis is 2 or more, a number of particles Ne calculated by the following formula (1) is 700 or more, and a specific surface area is 10 m$^2$/g or less.

$$Ne = No \times F \qquad (1)$$

(In formula (1), No is a number of particles of the carbon material obtained from the flow type-particle image analysis. F (%) is a particle frequency of the carbon material having a particle size of less than 3 μm obtained from the flow type-particle image analysis.)

[2] The carbon material according to [1], wherein the number of Ne is 1500 or more.

[3] The carbon material according to [1] or [2], wherein Ne is 100,000 or less.

[4] The carbon material according to any one of [1] to [3], having a specific surface area of 1 m$^2$/g or more.

[5] The carbon material according to any one of [1] to [4], having a volume-average particle size of 8 μm or more.

[6] The carbon material according to any one of [1] to [5], having a tap density of 0.60 g/cm$^3$ to 1.80 g/cm$^3$.

[7] The carbon material according to any one of [1] to [6], wherein at least one of the peaks exists in a range of 10 μm to 25 μm.

[8] The carbon material according to any one of [1] to [7], wherein at least one of the peaks exists in a range of 1 μm to 5 μm.

[9] The carbon material according to any one of [1] to [8], comprising a carbon material (A) having Ne(A) of 10 to 1000 and a carbon material (B) having Ne(B) of 3000 to 300000. (Ne(A) is a number of particles of the carbon material (A) calculated by the following formula (2), and Ne(B) is a number of particles of the carbon material (B) calculated by the following formula (3) . In the formula (2), No (A) is a number of particles of the carbon material (A) obtained from the flow type-particle image analysis. F(A) (%) is a particle frequency of the carbon material (A) having a particle size of less than 3 μm obtained from the flow type-particle image analysis. No(B) is a number of particles of the carbon material (B) obtained from the flow type-particle image analysis. F(B) (%) is a particle frequency of the carbon material (B) having a particle size of less than 3 μm obtained from the flow type-particle image analysis.)

$$Ne(A) = No(A) \times F(A) \qquad (2)$$

$$Ne(B) = No(B) \times F(B) \qquad (3)$$

[10] The carbon material according to [9], wherein the Ne(B) is 10,000 or more.

[11] The carbon material according to [9] or [10], wherein the content of the carbon material (B) is 1% by mass or more and to 30% by mass or less based on 100% by mass of the carbon material.

[12] The carbon material according to any one of [9] to [11], wherein the carbon material (B) has a tap density of 0.50 g/cm$^3$ or less.

[13] The carbon material according to any one of [1] to [12], wherein the carbon material is used in a secondary battery.

[14] A method for producing the carbon material according to any one of [1] to [13], comprising a step of mixing a carbon material having Ne(A) of 10 to 1000 and a carbon material (B) having Ne(B) of 3000 to 300000. (Ne(A) is a number of particles of the carbon material (A) calculated by the following formula (2), and Ne(B) is a number of particles of the carbon material (B) calculated by the following formula (3). In the formula (2), No (A) is a number of particles of the carbon material (A) obtained from the flow type-particle image analysis. F(A) (%) is a particle frequency of the carbon material (A) having a particle size of less than 3 μm obtained from the flow type-particle image analysis. No(B) is a number of particles of the carbon material (B) obtained from the flow type-particle image analysis. F(B) (%) is a particle frequency of the carbon material (B) having a particle size of less than 3 μm obtained from the flow type-particle image analysis.)

$$Ne(A) = No(A) \times F(A) \qquad (2)$$

$$Ne(B) = No(B) \times F(B) \qquad (3)$$

[15] A secondary battery including a positive electrode, a negative electrode, and an electrolyte,

wherein the negative electrode comprises a current collector and a negative electrode active material layer disposed on the current collector, and
wherein the negative electrode active material layer contains the carbon material according to any one of [1] to [13] .

[16] A method for manufacturing a secondary battery including a positive electrode, a negative electrode, and an electrolyte,
Wherein the method comprises a step of forming a negative electrode active material layer containing the carbon material according to any one of [1] to [13] on a current collector to produce the negative electrode.

Advantageous Effects of Invention

According to the carbon material of the present invention, it is possible to provide a secondary battery that has excellent cycle characteristics and achieves both a high capacity retention rate and a low DCR retention rate even after 500 cycles.

Description of Embodiments

The present invention is described in detail below. The present invention is not limited by the following description. Various modifications may be made without departing from the spirit and scope of the present invention.
In the present invention, when a range is expressed using two numerical values or two physical properties with "to" interposed therebetween, the two numerical values or two physical properties before and after "to" are included in the range.

[Carbon material]

The carbon material of the present invention is characterized in that a number of peaks in the particle size distribution obtained from flow type-particle image analysis is 2 or more, the number of particles Ne calculated by the following formula (1) is 700 or more, and the specific surface area is 10 $m^2$/g or less.

$$Ne = No \times F \qquad (1)$$

(In formula (1), No is a number of particles of the carbon material obtained from the flow type-particle image analysis. F (%) is a particle frequency of the carbon material having a particle size of less than 3 $\mu$m obtained from the flow type-particle image analysis.)
A carbon material having a particle size distribution peak number of 2 or more, a particle number Ne of 700 or more, and a specific surface area of 10 $m^2$/g or less can achieve both a high capacity retention rate and a low DCR retention rate. Although the details of the mechanism are not clear, it is presumed as follows.
During the charge/discharge cycle of a secondary battery, typified by a lithium-ion secondary battery, electrical contact between the particles may weaken due to expansion and contraction of the negative electrode active material particles during the cycle. This weakening of electrical contact causes isolation and deactivation of some particles, leading to a decrease in cycle characteristics. On the other hand, in graphite having a particle size distribution peak number of 2 or more, a particle number Ne of 700 or more, and a specific surface area of 10 $m^2$/g or less, fine particles less than 3 $\mu$m are present in the gaps between large particles. The fine particles can fit in and fill the gaps. This is thought to lead to improvement in cycle characteristics by maintaining electrical contact between particles during the cycle and suppressing isolation and deactivation of particles. Furthermore, since isolation and deactivation of particles also contribute to deterioration of the DCR retention rate, it is thought that improving the electrical contact improves the DCR retention rate as well as the cycle capacity retention rate.
From this viewpoint, the number of particles Ne of the carbon material of the present invention is preferably 700 or more, more preferably 1000 or more, and even more preferably 1500 or more. On the other hand, when the number of particles Ne is excessively large, an excessive increase in the specific surface area may cause a decrease in battery durability. From this viewpoint, the number of particles Ne of the carbon material of the present invention is preferably 100,000 or less, and more preferably 50,000 or less, still more preferably 20,000 or less, even more preferably 10,000 or less, particularly preferably 7,000 or less.

In this specification, the number of particles Ne of the carbon material is determined by measuring the number of particles No (number) of the carbon material and the particle frequency F (%) of the carbon material having a particle size of less than 3 μm using a flow type-particle image analyzer. The value is calculated using the following formula (1) .

$$Ne = No \times F \quad (1)$$

The specific surface area of the carbon material of the present invention is 10 m²/g or less, but from the viewpoint of battery durability, it is preferably 6.0 m²/g or less, and more preferably 4.0 m²/g or less. On the other hand, from the viewpoint of ensuring electrical contact between particles, the specific surface area of the carbon material of the present invention is preferably 1 m²/g or more, more preferably 1.5 m²/g or more, and even more preferably 2.0 m²/g or more.

In this specification, various specific surface areas are values measured by the BET method using nitrogen adsorption.

From the viewpoint of battery durability, the average particle size of the carbon material of the present invention is preferably 4 μm or more, more preferably 7 μm or more, and even more preferably 8 μm or more. On the other hand, from the viewpoint of ensuring electrical contact between particles, the average particle size of the carbon material of the present invention is preferably 24 μm or less, and more preferably 19 μm or less.

In this specification, various average particle sizes are defined as volume-average particle diameters (median diameter (d50)) measured from a volume-based particle size distribution measured by a laser diffraction method.

From the viewpoint of improving the energy density of the battery, the tap density of the carbon material of the present invention is preferably 0.60 g/cm³ or more, more preferably 0.95 g/cm³ or more, and even more preferably 1.05 g/cm³ or more. On the other hand, from the viewpoint of ensuring electrical contact between particles, the tap density of the carbon material of the present invention is preferably 1.80 g/cm³ or less, more preferably 1.35 g/cm³ or less, and even more preferably 1.25 g/cm³ or less.

In this specification, the tap density is defined as the density determined using a powder density gage by dropping the particles into a cylindrical tap cell having a diameter of 1.6 cm and a volume of 20 cm³ to fully fill the cell with the particles, tapping the cell 1000 times with a stroke length of 10 mm, and calculating the density of the sample from the volume and mass of the sample.

It is preferable that at least one of the two or more peaks in the particle size distribution of the carbon material of the present invention exists in the range of 10 μm to 25 μm. When the peak exists in the range of 10 μm to 25 μm, contact with particles less than 3 μm becomes good. From this viewpoint, it is preferable that the carbon material of the present invention has one peak in the particle size distribution, particularly in the range of 10 μm to 25 μm.

It is preferable that at least one of the two or more peaks in the particle size distribution of the carbon material of the present invention exists in the range of 1 μm to 5 μm. When the peak exists in the range of 1 μm to 5 μm, contact with particles of 10 μm to 25 μm becomes good. From this viewpoint, it is preferable that the carbon material of the present invention has one peak in the particle size distribution, particularly in the range of 1 μm to 5 μm.

A carbon material having a particle size distribution peak number of 2 or more can be produced by mixing two or more types of carbon materials having different numbers of particles. When producing the carbon material, by adjusting the mixing ratio of the carbon material so as to satisfy the above particle number Ne, both the peak number of the particle size distribution and the particle number Ne can be within the above range.

In addition, when producing the carbon material, by using a carbon material having a volume-average particle size of 12 μm to 25 μm and a carbon material having a volume-average particle size of 5 μm to 11 μm as the two or more types of carbon materials used, the carbon material having a particle size distribution peaks of 10 μm to 25 μm and 1 μm to 5 μm can be obtained.

In this specification, the number of peaks in the particle size distribution is a value measured from the particle size distribution measured by flow type-particle image analysis.

When the carbon material of the present invention is obtained by mixing two or more types of carbon materials having different numbers of particles, from the viewpoint of battery durability, it is preferable that the carbon material of the present invention is produced by mixing a carbon material (A) having a small amount of Ne(A) and a carbon material (B) having a large amount of Ne(B).

Ne(A) is the number of particles of the carbon material (A) calculated by the following formula (2), and Ne(B) is the number of particles of the carbon material (B) calculated by the following formula (3). In the formula (2), No(A) is a number of particles of the carbon material (A) obtained from the flow type-particle image analysis. F(A) (%) is a particle frequency of the carbon material (A) having a particle size of less than 3 μm obtained from the flow type-particle image analysis. In the formula (3), No (B) is a number of particles of the carbon material (B) obtained from the flow type-particle image analysis. F(B) (%) is a particle frequency of the carbon material (B) having a particle size of less than 3 μm

obtained from the flow type-particle image analysis.

$$Ne(A) = No(A) \times F(A) \qquad (2)$$

$$Ne(B) = No(B) \times F(B) \qquad (3)$$

<Carbon material (A)>

Examples of the carbon material (A) include artificial graphite, natural graphite, and composite carbon materials containing graphite and amorphous carbon. These carbon materials (A) may be used alone or in combination of two or more. Among these carbon materials (A), from the viewpoint of battery durability, artificial graphite, a composite carbon material containing graphite and amorphous carbon, and a mixture of a composite carbon material containing graphite and amorphous carbon and natural graphite are preferred, and a composite carbon material containing graphite and amorphous carbon, and a mixture of a composite carbon material containing graphite and amorphous carbon and natural graphite are more preferred.

When a composite carbon material containing graphite and amorphous carbon is used as the carbon material (A), from the viewpoint of reducing the specific surface area, the mass ratio of graphite and amorphous carbon (graphite: amorphous carbon) is preferably 1:0.01 or more, and more preferably 1:0.04 or more. On the other hand, when a composite carbon material containing graphite and amorphous carbon is used as the carbon material (A), from the viewpoint of ensuring specific capacity, the mass ratio of graphite and amorphous carbon (graphite: amorphous carbon) is preferably 1:0.15 or less, and more preferably 1:0.10 or less.

The number of particles Ne(A) of the carbon material (A) is preferably 10 or more, and more preferably 50 or more, from the viewpoint of ensuring electrical contact between particles and improving energy density. On the other hand, the number of particles Ne(A) of the carbon material (A) is preferably 1000 or less, and more preferably 900 or less, from the viewpoint of decreasing battery durability due to increasing in specific surface area.

In this specification, the number of particles Ne(A) of the carbon material (A) is determined by measuring the number of particles No(A) (number) of the carbon material (A) and the particle frequency F(A) (%) of the carbon material (A) having a particle size of less than 3 $\mu$m using a flow type-particle image analyzer. The value is calculated using the following formula (2).

$$Ne(A) = No(A) \times F(A) \qquad (2)$$

From the viewpoint of ensuring electrical contact between particles, the specific surface area of the carbon material (A) is preferably 0.5 m$^2$/g or more, and more preferably 1.0 m$^2$/g or more. On the other hand, from the viewpoint of battery durability, the specific surface area of the carbon material (A) is preferably 5.0 m$^2$/g or less, and more preferably 3.0 m2/g or less.

From the viewpoint of battery durability, the average particle size of the carbon material (A) is preferably 5.0 $\mu$m or more, and more preferably 8.0 $\mu$m or more. On the other hand, the average particle size of the carbon material (A) is preferably 25.0 $\mu$m or less, and more preferably 20.0 $\mu$m or less, from the viewpoint of ensuring electrical contact between particles.

The tap density of the carbon material (A) is preferably 1.00 g/cm$^3$ or more, and more preferably 1.10 g/cm$^3$ or more, from the viewpoint of improving the energy density of the battery. On the other hand, the tap density of the carbon material (A) is preferably 1.40 g/cm$^3$ or less, and more preferably 1.30 g/cm$^3$ or less, from the viewpoint of ensuring electrical contact between particles.

<Carbon material (B)>

Examples of the carbon material (B) include artificial graphite, natural graphite, and a composite carbon material containing graphite and amorphous carbon. These carbon materials (B) may be used alone or in combination of two or more. Among these carbon materials (B), from the viewpoint of both ensuring electrical contact between particles and battery durability, artificial graphite, natural graphite, a mixture of artificial graphite and natural graphite, and a composite carbon material containing graphite and amorphous carbon are preferred, and artificial graphite and natural graphite are more preferred.

The number of particles Ne(B) of the carbon material (B) is preferably 3,000 or more, and more preferably 10,000 or more, from the viewpoint of ensuring electrical contact between particles. On the other hand, the number of particles Ne(B) of the carbon material (B) is preferably 300,000 or less, and more preferably 200,000 or less, from the viewpoint of decreasing battery durability due to increasing in specific surface area.

In this specification, the number of particles Ne(B) of the carbon material (B) is determined by measuring the number of particles No(B) (number) of the carbon material (B) and the particle frequency F(B) (%) of the carbon material (B) having a particle size of less than 3 $\mu$m using a flow type-particle image analyzer. The value is calculated using the following formula (3).

$$Ne(B) = No(B) \times F(B) \qquad (3)$$

The specific surface area of the carbon material (B) is preferably 1.0 m$^2$/g or more, and more preferably 3.0 m$^2$/g or more, from the viewpoint of ensuring electrical contact between particles. On the other hand, from the viewpoint of battery durability, the specific surface area of the carbon material (B) is preferably 20.0 m$^2$/g or less, and more preferably 15.0 m$^2$/g or less.

From the viewpoint of battery durability, the average particle size of the carbon material (B) is preferably 3 $\mu$m or more, and more preferably 5 $\mu$m or more. On the other hand, from the viewpoint of ensuring electrical contact between particles, the average particle size of the carbon material (B) is preferably 15 $\mu$m or less, and more preferably 10 $\mu$m or less.

From the viewpoint of improving the energy density of the battery, the tap density of the carbon material (B) is preferably 0.20 g/cm$^3$ or more, and more preferably 0.30 g/cm$^3$ or more. On the other hand, from the viewpoint of ensuring electrical contact between particles, the tap density of the carbon material (B) is preferably 1.20 g/cm$^3$ or less, more preferably 0.80 g/cm$^3$ or less, and even more preferably 0.50 g/cm$^3$ or less.

<Method of pulverizing carbon material>

For pulverization of the carbon material (A) and the carbon material (B), crushing type crushers such as roller mills, impact type crushers such as high-speed rotation crushers, air flow impingement type crushers such as jet mills, and dry swirling flow type crushers may be used.

<Composition of carbon material>

The composition of the carbon material when the carbon material of the present invention is produced by mixing the carbon material (A) and the carbon material (B) will be explained.

The content C(A) of the carbon material (A) is preferably 70% by mass or more, and more preferably 85% by mass or more based on the total 100% by mass of the carbon material, because it is possible to improve the electrical contact between particles as high as possible without impairing the durability of the battery. On the other hand, the content C(A) of the carbon material (A) is preferably 99% by mass or less, and more preferably 98% by mass or less based on the total 100% by mass of the carbon material, because it is possible to ensure at least minimum electrical contact between particles while maintaining the durability of the battery as high as possible.

The content C(B) of the carbon material (B) is preferably 1% by mass or more, and more preferably 2% by mass or more based on the total of 100% by mass of the carbon material, because it is possible to ensure at least minimum electrical contact between the particles while maintaining the durability of the battery as high as possible. On the other hand, the content C(B) of the carbon material (B) is preferably 30% by mass or less, and more preferably 15% by mass or less based on the total of 100% by mass of the carbon material, because it is possible to improve the electrical contact between particles as high as possible without impairing the durability of the battery.

The number of particles Nem(A) of the carbon material (A) in the entire carbon material is preferably 7 or more, and more preferably 35 or more, from the viewpoint of ensuring electrical contact between particles and improving energy density. On the other hand, the number of particles Nem(A) of the carbon material (A) in the entire carbon material is preferably 990 or less, and more preferably 890 or less, from the viewpoint of decreasing battery durability due to increasing in specific surface area.

In this specification, the number of particles Nem(A) of the carbon material (A) in the entire carbon material is a value calculated by the following formula (4) from the number of particles Ne(A) of the carbon material (A) and the content C(A) of the carbon material (A).

$$Nem(A) = Ne(A) \times C(A) \div 100 \ (\%) \qquad (4)$$

The number of particles Nem(B) of the carbon material (B) in the entire carbon material is preferably 200 or more, and more preferably 1000 or more, from the viewpoint of decreasing battery durability due to increasing in specific surface area. On the other hand, the number of particles Nem(B) of the carbon material (B) in the entire carbon material is preferably 30,000 or less, and more preferably 20,000 or less, from the viewpoint of ensuring electrical contact between particles and improving energy density.

In this specification, the number of particles Nem(B) of the carbon material (B) in the entire carbon material is a value calculated by the following formula (5) from the number of particles Ne(B) of the carbon material (B) and the content C(B) of the carbon material (B).

$$\mathrm{Nem(B)\ =\ Ne(B)\ \times\ C(B)\ \div\ 100\ (\%)} \qquad (5)$$

The carbon material (A) and the carbon material (B) may be mixed using a rotating container type mixer represented by a horizontal cylinder type or a double cone type; a fixed container type mixer represented by a screw type or ribbon type; a fluid motion type mixer represented by a jet pump type or the like.

<Application>

By using the carbon material of the present invention as a negative electrode active material of a secondary battery, it is possible to realize a secondary battery that has excellent cycle characteristics and has both a high capacity retention rate and a low DCR retention rate. The carbon material is therefore useful as a negative electrode active material for a secondary battery.

[Secondary battery]

The secondary battery of the present invention is a secondary battery including a positive electrode, a negative electrode, and an electrolyte, wherein the negative electrode comprises a current collector and a negative electrode active material layer disposed on the current collector, and wherein the negative electrode active material layer contains the carbon material of the present invention. This secondary battery is usually manufactured by the method for manufacturing a secondary battery of the present invention, which includes a step of forming a negative electrode active material layer on a current collector using the carbon material of the present invention to produce the negative electrode.

<Negative electrode>

In a method for producing the negative electrode (hereinafter sometimes referred to as "the negative electrode of the present invention") using the carbon material of the present invention, the carbon material of the present invention mixed with a binder (binder resin) is mixed with a dispersion medium to make a slurry. This slurry is applied to a current collector and dried to form a negative electrode active material layer on the current collector.

As the binder, one having an olefinic unsaturated bond in the molecule is used. The type is not particularly limited. Specific examples include styrene-butadiene rubber, styreneisoprene-styrene rubber, acrylonitrile-butadiene rubber, butadiene rubber, and ethylene-propylene-diene copolymer. By using a binder having such an olefinic unsaturated bond, the swelling property of the negative electrode active material layer to the electrolytic solution can be reduced. Among them, styrene-butadiene rubber is preferred because of its easy availability.

As a binder having an olefinic unsaturated bond in its molecules, it is desirable to have a large molecular weight or a high proportion of unsaturated bonds.

As a binder having a large molecular weight, it is desirable that the weight average molecular weight is usually in the range of 10,000 or more, preferably 50,000 or more, and usually 1,000,000 or less, preferably 300,000 or less. As a binder having a high proportion of unsaturated bonds, it is desirable that the number of moles of olefinic unsaturated bonds per 1 gram of the total binder is usually $2.5 \times 10^{-7}$ or more, preferably $8 \times 10^{-7}$ or more, and usually $5 \times 10^{-6}$ or less, and preferably $1 \times 10^{-6}$ or less.

The binder only needs to satisfy at least one of these molecular weight regulations and unsaturated bond ratio regulations, but it is more preferable to use a binder that satisfies both regulations at the same time. When the molecular weight of the binder having an olefinic unsaturated bond is too small, mechanical strength will be poor. When the molecular weight of the binder is too large, flexibility will be poor. Furthermore, when the proportion of olefinic unsaturated bonds in the binder is too low, the strength-improving effect will be diminished, and when it is too high, flexibility will be poor.

The degree of unsaturation of the binder having an olefinic unsaturated bond is desirable usually in the range of 15% or more, preferably 20% or more, and more preferably 40% or more, and usually 90% or less, and preferably 80% or less. The degree of unsaturation refers to the ratio (%) of double bonds to repeating units of a polymer.

In the present invention, a binder having no olefinic unsaturated bonds can also be used in combination with the above-mentioned binder having an olefinic unsaturated bond as long as the effects of the present invention are not lost. The mixing ratio of the binder having no olefinic unsaturated bonds to the amount of the binder having an olefinic unsaturated bond is usually 150% by mass or less, and preferably 120% by mass or less.

Coating properties can be improved by using a binder having no olefinic unsaturated bonds, but when the amount used is too large, the strength of the active material layer will decrease.

Examples of binder having no olefinic unsaturated bonds include polysaccharides such as methylcellulose, carboxymethylcellulose, and starch; thickening polysaccharides such as carrageenan, pullulan, guar gum, and xanthan gum; polyethers such as polyethylene oxide, polypropylene oxide, vinyl alcohols such as polyvinyl alcohol and polyvinyl butyral; polyacids such as polyacrylic acid and polymethacrylic acid, or metal salts of these polymers; fluorine-containing polymers such as polyvinylidene fluoride; alkane polymers such as polyethylene, polypropylene and copolymers thereof.

The mass ratio (the carbon material of the present invention / the binder) of the carbon material of the present invention in the slurry to the binder (which may be a mixture of a binder having an unsaturated bond and a binder having no unsaturated bonds as described above) is usually 90/10 or more, preferably 95/5 or more, and usually 99.9/0.1 or less, preferably 99.5/0.5 in terms of dry mass ratio.

When the ratio of binder is too high, it tends to cause a decrease in capacity and an increase in resistance. When the ratio of the binder is too small, the strength of the negative electrode plate will be poor.

An organic solvent such as alcohol or water can be used as a dispersion medium to form a slurry in which the carbon material of the present invention and a binder are dispersed.

A conductive agent may be further added to this slurry if desired. Examples of the conductive agent include carbon black such as acetylene black, Ketjen black, and furnace black, and fine powder of Cu, Ni, or an alloy thereof having an average particle size of 1 $\mu$m or less. The amount of the conductive agent added is usually 10% by mass or less based on the carbon material of the present invention.

A conventionally known current collector can be used to apply the slurry. Specifically, metal thin films such as rolled copper foil, electrolytic copper foil, and stainless steel foil can be mentioned. The thickness of the current collector is usually 4 $\mu$m or more, preferably 6 $\mu$m or more, and usually 30 $\mu$m or less, preferably 20 $\mu$m or less.

The above slurry is applied onto a current collector using a doctor blade or the like, dried, and then pressed using a roll press or the like to form a negative electrode active material layer. At this time, the slurry is preferably applied so that the amount of the carbon material of the present invention deposited on the current collector is 5 to 15 mg/cm$^2$.

Drying after applying the slurry onto the current collector is carried out at a temperature of usually 60°C or higher, preferably 80°C or higher, and usually 200°C or lower, preferably 195°C or lower, in dry air or an inert atmosphere.

The thickness of the negative electrode active material layer obtained by coating and drying the slurry is usually 5 $\mu$m or more, preferably 20 $\mu$m or more, more preferably 30 $\mu$m or more, and usually 200 $\mu$m or less, preferably 100 $\mu$m or less, more preferably 75 $\mu$m or less in the state after pressing. When the negative electrode active material layer is too thin, it lacks practicality as a negative electrode active material layer due to a balance with the particle size of the carbon material of the present invention, which are negative electrode active materials. When the negative electrode active material layer is too thick, it is difficult to obtain a sufficient function of intercalating and deintercalating Li ions for high-density current values.

The density of the carbon material of the present invention in the negative electrode active material layer varies depending on the application, but is preferably 1.5 g/cm$^3$ or more, more preferably 1.54 g/cm$^3$ or more. In applications where capacity is important, it is particularly preferably 1.6 g/cm$^3$ or more, more particularly preferably 1.65 g/cm$^3$ or more, and most preferably 1.7 g/cm$^3$ or more. When the density is too low, the capacity of the battery per unit volume is not necessarily sufficient. When the density is too high, the rate characteristics will deteriorate, so the density of the density of the carbon material of the present invention is preferably 1.9 g/cm$^3$ or less.

When producing the negative electrode of the present invention using the carbon material of the present invention described above, there are no particular restrictions on the method or selection of other materials.

Even in the case of manufacturing a secondary battery using this negative electrode, there are no particular restrictions on the selection of the components necessary for battery construction, such as the positive electrode and electrolyte that constitute the secondary battery.

<Secondary battery>

Hereinafter, details of the secondary battery of the present invention including a negative electrode using the carbon material of the present invention will be explained using a lithium-ion secondary battery as an example. The materials, manufacturing methods, etc. that can be used for the secondary battery of the present invention are not limited to the following specific examples.

The basic configuration of the secondary battery of the present invention, particularly the lithium-ion secondary battery, is the same as that of a conventionally known lithium-ion secondary battery, and usually includes a positive electrode and a negative electrode capable of intercalating and deintercalating lithium ions, and an electrolyte. As the negative electrode, the negative electrode of the present invention described above is used.

The positive electrode is one in which a positive electrode active material layer containing a positive electrode active material and a binder is formed on a current collector.

Examples of the positive electrode active material include metal chalcogen compounds that can occlude and release alkali metal cations such as lithium ions during charging and discharging. Examples of metal chalcogen compounds include transition metal oxides such as vanadium oxide, molybdenum oxide, manganese oxide, chromium oxide, titanium oxide, tungsten oxide, transition metal sulfides such as vanadium sulfide, molybdenum sulfide, titanium sulfide and CuS; phosphorus-sulfur compounds of transition metals such as $NiPS_3$ and $FePS_3$; selenium compounds of transition metals such as $VSe_2$ and $NbSe_3$; composite oxides of transition metals such as $Fe_{0.25}V_{0.75}S_2$, $Na_{0.1}CrS_2$; composite sulfides of transition metals such as $LiCoS_2$ and $LiNiS_2$.

Among these, $V_2O_5$, $V_5O_{13}$, $VO_2$, $Cr_2O_3$, $MnOz$, $TiO$, $MoVzOe$, $LiCoO_2$, $LiNiO_2$, $LiMn_2O_4$, $TiS_2$, $V_2S_5$, $Cr_{0.25}V_{0.75}S_2$, and $Cr_{0.5}V_{0.5}S_2$ are preferable, and $LiCoO_2$, $LiNiO_2$, $LiMn_2O_4$, and lithium transition metal composite oxides in which a part of these transition metals is replaced with other metals are particularly preferable. These positive electrode active materials may be used alone or in combination.

As the binder for binding the positive electrode active material, any known binder can be selected and used. Examples include inorganic compounds such as silicates and water glass, and resins without unsaturated bonds such as Teflon (registered trademark) and polyvinylidene fluoride. Among these, preferred are resins having no unsaturated bonds. When a resin having an unsaturated bond is used as the resin for binding the positive electrode active material, there is a risk of decomposition during the oxidation reaction (during charging). The weight average molecular weight of these resins is usually 10,000 or more, preferably 100,000 or more, and usually 3,000,000 or less, preferably 1,000,000 or less.

A conductive agent may be contained in the positive electrode active material layer in order to improve the conductivity of the electrode. The conductive agent is not particularly limited as long as it can be mixed with the active material in an appropriate amount to impart conductivity. Examples of the conductive agent include carbon powders such as acetylene black, carbon black, and graphite, and various metal fibers, powders, and foils.

The positive electrode plate is formed by slurrying the positive electrode active material and the binder with a dispersant, applying the slurry onto the current collector, and drying it using the same method as in manufacturing the negative electrode of the present invention described above. As the current collector of the positive electrode, aluminum, nickel, stainless steel (SUS), etc. are used, but there is no limitation at all.

As the electrolyte, a nonaqueous electrolytic solution in which a lithium salt is dissolved in a nonaqueous solvent, or a nonaqueous electrolytic solution made into a gel-like, rubber-like, or solid sheet form using an organic polymer compound, etc., is used.

The nonaqueous solvent used in the nonaqueous electrolyte is not particularly limited, and can be appropriately selected and used from known nonaqueous solvents that have been proposed as solvents for nonaqueous electrolytes. Examples include chain carbonates such as diethyl carbonate, dimethyl carbonate, and ethylmethyl carbonate; cyclic carbonates such as ethylene carbonate, propylene carbonate, and butylene carbonate; chain ethers such as 1,2-dimethoxyethane; cyclic ethers such as tetrahydrofuran, 2-methyl tetrahydrofuran, sulfolane, and 1,3-dioxolane; chain esters such as methyl formate, methyl acetate, and methyl propionate; and cyclic esters such as $\gamma$-butyrolactone and $\gamma$-valerolactone.

These nonaqueous solvents may be used alone or in combination of two or more. In the case of a mixed solvent, a combination of a mixed solvent containing a cyclic carbonate and a chain carbonate is preferred. It is particularly preferable that the cyclic carbonate is a mixed solvent of ethylene carbonate and propylene carbonate because it can exhibit high ionic conductivity even at low temperatures and improves low-temperature charging load characteristics.

Among them, the content of propylene carbonate is preferably 2% by mass or more and 80% by mass or less, more preferably 5% by mass or more and 70% by mass or less, and even more preferably 10% by mass or more and 60% by mass or less, based on the entire nonaqueous solvent. When the content of propylene carbonate is lower than the above lower limit, the ionic conductivity at low temperatures will decrease. If the content of propylene carbonate is higher than the above upper limit, propylene carbonate solvated with Li ions co-inserts into the graphite phase of the negative electrode, causing delamination and deterioration of the graphite-based negative electrode active material, making it impossible to obtain sufficient capacity.

The lithium salt used in the nonaqueous electrolyte is also not particularly limited, and can be appropriately selected and used from among known lithium salts that are known to be usable for this purpose. Examples include halides such as LiCl and LiBr; perhalates such as $LiClO_4$ $LiBrO_4$ and $LiClO_4$; inorganic lithium salts such as inorganic fluoride salts such as $LiPF_6$, $LiBF_4$ and $LiAsF_6$; perfluoroalkanesulfonates such as $LiCF_3SO_3$ and $LiC_4F_9SO_3$; fluorine-containing organic lithium salts such as perfluoroalkanesulfonic acid imide salts such as Li trifluorosulfonimide $((CF_3SO_2)_2NLi)$. Among these, $LiClO_4$, $LiPF_6$ and $LiBF_4$ are preferred.

The lithium salts may be used alone or in combination of two or more. The concentration of lithium salt in the nonaqueous electrolyte is usually in the range of 0.5 mol/L or more and 2.0 mol/L or less.

When using an electrolyte in the form of a gel, rubber, or solid sheet by incorporating an organic polymer compound into the above-mentioned nonaqueous electrolyte, specific examples of the organic polymer compound include polyether polymer compounds such as polyethylene oxide and polypropylene oxide; crosslinked polymers of polyether polymer compounds; vinyl alcohol polymer compounds such as polyvinyl alcohol and polyvinyl butyral; insolubilized vinyl alcohol polymer compounds; polyepichlorohydrin; polyphosphazene; polysiloxane; vinyl polymer compounds such as polyvinylpyrrolidone, polyvinylidene carbonate, and polyacrylonitrile; and polymer copolymers such as poly(ω-methoxyoligooxyethylene methacrylate), poly(ω-methoxyoligooxyethylene methacrylate-co-methyl methacrylate) and poly(hexafluoropropylene - vinylidene fluoride).

The above-mentioned nonaqueous electrolyte may further contain a film forming agent. Specific examples of film forming agents include carbonate compounds such as vinylene carbonate, vinyl ethyl carbonate, and methylphenyl carbonate; alkenesulfides such as ethylene sulfide and propylene sulfide; and sultone compounds such as 1,3-propane sultone and 1,4-butane sultone; and acid anhydrides such as maleic anhydride and succinic anhydride.

Furthermore, an overcharge preventive agent such as diphenyl ether or cyclohexylbenzene may be added to the nonaqueous electrolyte.

When these additives are used, their content in the nonaqueous electrolyte is usually 10% by mass or less, preferably 8% by mass or less, more preferably 5% by mass or less, and particularly preferably 2% by mass or less. When the content of the above-mentioned additive is too large, there is a risk that other battery characteristics will be adversely affected, such as an increase in initial irreversible capacity and a decrease in low-temperature characteristics and rate characteristics.

As the electrolyte, a solid polymer electrolyte that is a conductor of alkali metal cations such as lithium ions can also be used. As the polymer solid electrolyte, examples include the above-mentioned polyether-based polymer compound in which a Li salt is dissolved, and a polymer in which the terminal hydroxyl group of polyether is substituted with an alkoxide.

A porous separator such as a porous membrane or nonwoven fabric is usually interposed between the positive electrode and the negative electrode to prevent short circuits between the electrodes. In this case, the nonaqueous electrolyte is used by impregnating to a porous separator. As the material for the separator, polyolefins such as polyethylene and polypropylene and polyether sulfone, etc. are used, and polyolefins are preferred.

The form of the lithium-ion secondary battery to which the present invention is applied is not particularly limited. Examples include a cylinder type in which a sheet electrode and a separator are formed into a spiral shape, a cylinder type in which a pellet electrode and a separator are combined to have an inside-out structure, and a coin type in which a pellet electrode and a separator are laminated.

By housing these types of batteries in any external case, they can be used in any shape such as a coin shape, a cylindrical shape, or a square shape.

The procedure for assembling a lithium-ion secondary battery is not particularly limited, and may be assembled using an appropriate procedure depending on the structure of the battery. For example, a negative electrode is placed on an exterior case, an electrolytic solution and a separator are provided thereon, a positive electrode is placed facing the negative electrode, and the battery is crimped together with a gasket and a sealing plate.

<Performance of secondary battery>

The secondary battery of the present invention has excellent cycle characteristics by using the carbon material of the present invention as a negative electrode active material.

Specifically, the capacity retention rate after 500 cycles measured by the method described in the Examples below is preferably 91.0% or more, and particularly preferably 92.0% or more.

Furthermore, the DCR retention rate after 500 cycles measured by the method described in the Examples below is preferably 160% or less, and particularly preferably 150% or less.

Example

Next, specific embodiments of the present invention will be explained in more detail with reference to Examples. The invention is not limited to these Examples.

[Measuring method]

The method for measuring the physical properties of graphite used in the following Examples and Comparative Examples is as follows.

<Number of particles Ne,Ne(A),Ne(B)>

The number of particles of carbon materials obtained in the Examples and Comparative Examples, as well as the carbon materials (A) and carbon materials (B) used in the Examples and Comparative Examples, were measured using a flow type-particle image analyzer (model name "FPIA", manufactured by Sysmex Corporation).

Specifically, approximately 0.2 g of each sample was dispersed in a 0.2% by mass aqueous solution (approximately 50 mL) of polyoxyethylene (20) sorbitan monolaurate, which was a surfactant, and 28 kHz ultrasonic waves were applied at an output of 60 W. After irradiating for 1 minute, the detection range was specified as 0.6 to 40 $\mu$m. The number of particles of carbon material, carbon material (A), and carbon material (B) (No,No(A),No(B)), and the partifcle frequency (F,F(A),F(B)) of carbon material, carbon material (A), and carbon material (B) having a particle size of less than 3 $\mu$m was measured. The values were calculated using the following formulas (1) to (3).

$$Ne = No \times F \qquad\qquad (1)$$

$$Ne(A) = No(A) \times F(A) \qquad (2)$$

$$Ne(B) = No(B) \times F(B) \qquad (3)$$

<Number of particles Nem(A),Nem(B)>

Regarding the carbon material (A) and carbon material (B) used in the Examples and Comparative Examples, the number of particles Nem(A) and Nem(B) ware calculated using the following formulas (4) to (5) from the number of particles (Ne(A) , Ne(B)) calculated above and the content rate (C(A), C ( B)).

$$Nem(A) = Ne(A) \times C(A) \div 100 \ (\%) \qquad (4)$$

$$Nem(B) = Ne(B) \times C(B) \div 100 \ (\%) \qquad (5)$$

<Number of peaks>

For the carbon materials obtained in Examples and Comparative Examples, the number of peaks was measured from the particle size distribution measured by flow type-particle image analysis.

Specifically, approximately 0.2 g of the sample was dispersed in a 0.2% by mass aqueous solution (approximately 50 mL) of polyoxyethylene (20) sorbitan monolaurate, which was a surfactant, and 28 kHz ultrasonic waves were applied at an output of 60 W. After irradiation for 1 minute, the detection range was specified as 0.6 to 40 $\mu$m. The particle size distributions of the carbon material, carbon material (A), and carbon material (B) were obtained. The number of peaks was measured from the obtained particle size distribution.

Additionally, the particle size of the carbon material at which the peak existed was determined.

<Average particle size>

The average particle size of the carbon materials obtained in Examples and Comparative Examples, as well as the carbon materials (A) and carbon materials (B) used in Examples and Comparative Examples was determined from the volume-based particle size distribution measured by laser diffraction method.

Specifically, about 2.0 g of the sample was added to about 150 mL of a 0.1% by volume aqueous solution of polyoxyethylene (20) sorbitan monolaurate (Tween 20 (registered trademark)), which was a surfactant, and 0.01 g of the sample was suspended and introduced as a measurement sample into a laser diffraction/scattering particle size distribution analyzer ("LA-920", manufactured by HORIBA, Ltd.). Then, the measurement sample was irradiated with ultrasonic waves at an intensity of 4 for 1 minute. The average particle diameter (d50) was measured from the volume-based particle size distribution measured by the device.

<Specific surface area>

The specific surface area of the carbon materials obtained in Examples and Comparative Examples, as well as the carbon materials (A) and carbon materials (B) used in the Examples and Comparative Examples, were measured using a specific surface area measuring device (model name "AMS8000", manufactured by Okura Riken Co., Ltd.). The specific surface area was measured by the nitrogen gas adsorption flow method and the BET one-point method.

Specifically, 0.4 g of the sample was filled into a cell, heated to 350°C for pretreatment, and then cooled to liquid nitrogen temperature to saturately adsorb a gas containing 30% nitrogen and 70% helium. Thereafter, the amount of gas desorbed by heating to room temperature was measured, and from the obtained results, the specific surface area was calculated by the BET method.

<Tap density>

The tap density of the carbon materials obtained in Examples and Comparative Examples, as well as the carbon materials (A) and carbon materials (B) used in the Examples and Comparative Examples, were measured using a powder density measuring device (model name: "Tap Denser KYT-4000", manufactured by Seishin Enterprise Co., Ltd.). The sample was dropped through a sieve having an opening of 300 $\mu$m into a cylindrical tap cell having a diameter of 1.6 cm and a volumetric capacity of 20 cm$^3$ and filled the cell completely. Thereafter, tapping with a stroke length of 10 mm was performed 1000 times, and the density calculated from the volume at that time and the mass of the sample was defined as the tap density.

[Synthesis Example 1]

Spheroidized graphite (average particle size 16.0 $\mu$m, BET specific surface area 6.9 m$^2$/g, tap density 1.06 g/cm$^3$) was obtained by spheroidizing flaky natural graphite having an average particle size of 100 $\mu$m. This spheroidized graphite was filled and sealed in a rubber container, subjected to isotropic pressure treatment at 200 MPa, and then crushed and classified to obtain spheroidized graphite powder. The spheroidized graphite powder was mixed with tar as an amorphous carbon precursor, the tar having been adjusted to have an ash content of less than 0.01% by mass, a metal impurity amount of 60 ppm by mass, and a Qi of less than 0.1% by mass. The mixture was then subjected to heat treatment using a furnace, wherein a pressure in the furnace was reduced to 10 torr or less, then, the pressure was returned to atmospheric pressure with nitrogen, and nitrogen was further passed through the furnace to reduce the oxygen concentration in the furnace to less than 100 ppm, and the temperature was raised to 1300°C. By crushing and classifying the obtained heated product, a carbon material (A-1) containing an amorphous carbonaceous material on the surface of spheroidized graphite was obtained. The obtained carbon material (A-1) had a mass ratio of spheroidized graphite to amorphous carbon (spheroidized graphite: amorphous carbon) of 1:0.05.

[Synthesis Example 2]

Spheroidized graphite (average particle size 16.0 $\mu$m, BET specific surface area 6.9 m$^2$/g, tap density 1.06 g/cm$^3$) was obtained by spheroidizing flaky natural graphite having an average particle size of 100 $\mu$m. The spheroidized graphite was mixed with pitch as an amorphous carbon precursor, the pitch having been adjusted to have an ash content of 0.02% by mass, a metal impurity amount of 20 ppm by mass, and a Qi of 1% by mass. The mixture was then subjected to heat treatment using a furnace, wherein a pressure in the furnace was reduced to 10 torr or less, then the pressure was returned to atmospheric pressure with nitrogen, and further nitrogen was passed through the furnace to reduce the oxygen concentration in the furnace to less than 100 ppm, and the temperature was raised to 1300°C. By crushing and classifying the obtained heated product, a carbon material (A-2) containing an amorphous carbonaceous material on the surface of spheroidized graphite was obtained. The obtained carbon material (A-2) had a mass ratio of spheroidized graphite to amorphous carbon (spheroidized graphite: amorphous carbon) of 1:0.055.

[Synthesis Example 3]

Spheroidized graphite (average particle size 16.0 $\mu$m, BET specific surface area 6.9 m$^2$/g, tap density 1.06 g/cm$^3$) was obtained by spheroidizing flaky natural graphite having an average particle size of 100 $\mu$m. This spheroidized graphite was filled and sealed in a rubber container, subjected to isotropic pressure treatment at 200 MPa, and then crushed and classified to obtain spheroidized graphite powder. The spheroidized graphite powder was mixed with pitch as an amorphous carbon precursor, the pitch having been adjusted to have an ash content of 0.02% by mass, a metal impurity content of 20 ppm by mass, and a Qi of 1% by mass. The mixture was then subjected to heat treatment using a furnace, wherein a pressure in the furnace was reduced to 10 torr or less, then the pressure was returned to atmospheric pressure with nitrogen, and nitrogen was further passed through the furnace to reduce the oxygen concentration in the furnace to less than 100 ppm, and the temperature was raised to 1300°C. By crushing and classifying the obtained heated product, a carbon material (A-3) containing an amorphous carbonaceous material on the surface of spheroidized graphite was obtained. The obtained carbon material (A-3) had a mass ratio of spheroidized graphite to amorphous carbon (spheroidized graphite: amorphous carbon) of 1:0.03.

[Synthesis Example 4]

Spheroidized graphite (average particle size 9.6 $\mu$m, BET specific surface area 8.3 m$^2$/g, tap density 0.69 g/cm$^3$) was obtained by spheroidizing flaky natural graphite having an average particle size of 100 $\mu$m. The spheroidized graphite was mixed with pitch as an amorphous carbon precursor, the pitch having been adjusted to have an ash content of 0.02% by mass, a metal impurity amount of 20 ppm by mass, and a Qi of 1% by mass. The mixture was then subjected to heat treatment using a furnace, wherein a pressure in the furnace was reduced to 10 torr or less, then the pressure was returned to atmospheric pressure with nitrogen, and further nitrogen was passed through the furnace to reduce the oxygen concentration in the furnace to less than 100 ppm, and the temperature was raised to 1300°C. By crushing and classifying the obtained heated product, a carbon material (A-4) containing an amorphous carbonaceous material on the surface of spheroidized graphite was obtained. The obtained carbon material (A-4) had a mass ratio of spheroidized graphite to amorphous carbon (spheroidized graphite: amorphous carbon) of 1:0.075.

[Synthesis Example 5]

A carbon material (B-1) was obtained by spheroidizing flaky natural graphite having an average particle size of 100 $\mu$m.

[Synthesis Example 6]

Raw coke obtained by coking coal tar pitch having a Qi of less than 1% by mass was pulverized to an average particle size of 8 $\mu$m using an air flow collision type pulverizer. This pulverized product was heated at 600°C, then filled into a graphite crucible, and then graphitized in a graphite furnace at 3000°C for 40 hours. The obtained graphitized material was pulverized using an impact type pulverizer to obtain a carbon material (B-2) which is artificial graphite.

[Synthesis Example 7]

The carbon material (B-1) was mixed with tar as an amorphous carbon precursor, the tar having been adjusted to have an ash content of less than 0.01 mass%, a metal impurity amount of 60 ppm by mass, and a Qi of less than 0.1 mass%. The mixture was then subjected to heat treatment using a furnace, wherein a pressure in the furnace was reduced to 10 torr or less, then the pressure was returned to atmospheric pressure with nitrogen, and nitrogen was further passed through to reduce the oxygen concentration in the furnace to less than 100 ppm, and the temperature was raised to 1300°C. By crushing and classifying the obtained heated product, a carbon material (B-3) containing an amorphous carbonaceous substance on the surface of spheroidized graphite was obtained. The obtained carbon material (B-3) had a mass ratio of spheroidized graphite to amorphous carbon (spheroidized graphite: amorphous carbon) of 1:0.05.

[Synthesis Example 8]

Calcined coke obtained by coking coal tar pitch having a Qi of less than 1% by mass for 24 hours and then calcining it in a rotary kiln was pulverized to an average particle size of 8 $\mu$m using an air flow collision type pulverizer. After filling this pulverized material into a graphite crucible, it was graphitized in a graphite furnace at 3000°C for 40 hours. The obtained graphitized product was pulverized using a dry swirl flow type pulverizer to obtain a carbon material (B-4) which was artificial graphite.

[Synthesis Example 9]

Raw coke obtained by coking coal tar pitch having a Qi of less than 1% by mass was pulverized to an average particle size of 12 $\mu$m using an impact pulverizer. This pulverized product was heated at 600°C, then filled into a graphite crucible, and then graphitized in a graphite furnace at 3000°C for 40 hours. The obtained graphitized product was pulverized using a dry swirl flow type pulverizer to obtain a carbon material (B-5) which was artificial graphite.

[Synthesis Example 10]

A carbon material (B-6) was obtained by spheroidizing flaky natural graphite having an average particle size of 100 μm.

[Synthesis Example 11]

A carbon material (B'-1) was obtained by spheroidizing flaky natural graphite having an average particle size of 100 μm.

[Examples 1 to 9, Comparative Examples 1 to 8]

<Production of carbon materials>

A total of 200 g of the carbon material (A) and the carbon material (B) (or carbon material (B')) shown in Table 1 ware placed in a polyethylene bag such that the content and particle numbers Nem(A) and Nem(B) became as shown in Table 1. After closing the opening of the bag, the materials in the bag were mixed by manually rotating the bag up and down 60 times to obtain carbon materials having the Ne and peak numbers shown in Table 1.

[Table 1]

| | Carbon material(A) | | | | | | | Carbon material(B) | | | | | | | Carbon material | |
|---|---|---|---|---|---|---|---|---|---|---|---|---|---|---|---|---|
| | Type | Content rate C(A) [mass%] | Average -particle size [$\mu$m] | Specific surface area [m²/g] | Tap density [g/cm³] | Ne(A) [Number] | Nem(A) [Number] | Type | Content rate C(B) [mass%] | Average -particle size [$\mu$m] | Specific surface area [m²/g] | Tap density [g/cm³] | Ne(B) [Number] | Nem(B) [Number] | Ne [Number] | Number of peaks [Number] |
| Example 1 | (A-1) | 97.5 | 17.6 | 2.6 | 1.21 | 615 | 599 | (B-1) | 2.5 | 5.5 | 15.0 | 0.46 | 88797 | 2220 | 2275 | 2 |
| Example2 | (A-1) | 95 | 17.6 | 2.6 | 1.21 | 615 | 584 | (B-1) | 5 | 5.5 | 15.0 | 0.46 | 88797 | 4440 | 4270 | 2 |
| Example3 | (A-1) | 90 | 17.8 | 2.6 | 1.21 | 615 | 553 | (B-2) | 10 | 7.5 | 2.8 | 1.08 | 22338 | 2234 | 4095 | 2 |
| Example4 | (A-1) | 92.5 | 17.6 | 2.6 | 1.21 | 615 | 569 | (B-3) | 7.5 | 7.2 | 6.4 | 0.70 | 3422 | 257 | 765 | 2 |
| Examples | (A-2) | 97.5 | 17.1 | 1.9 | 1.19 | 49 | 48 | (B-1) | 2.5 | 5.5 | 15.0 | 0.46 | 88797 | 2220 | 2220 | 2 |
| Example6 | (A-2) | 95 | 17.1 | 1.9 | 1.19 | 49 | 47 | (B-1) | 5 | 5.5 | 15.0 | 0.46 | 88797 | 4440 | 3108 | 2 |
| Example7 | (A-3) | 97.5 | 17.8 | 2.4 | 1.22 | 106 | 103 | (B-1) | 2.5 | 5.5 | 15.0 | 0.46 | 88797 | 2220 | 2423 | 2 |
| Examples | (A-1) | 90 | 17.6 | 2.6 | 1.21 | 615 | 553 | (B-4) | 10 | 9.0 | 4.4 | 0.46 | 12219 | 1222 | 1934 | 2 |
| Example9 | (A-1) | 90 | 17.6 | 2.6 | 1.21 | 615 | 553 | (B-5) | 10 | 6.7 | 17.2 | 0.61 | 30113 | 3011 | 4167 | 2 |
| Comparative Example1 | (A-1) | 100 | 17.6 | 2.6 | 1.21 | 615 | 615 | - | - | - | - | - | - | - | 615 | 1 |
| Comparative Example2 | (A-1) | 95 | 17.6 | 2.6 | 1.21 | 615 | 584 | (B'-1) | 5 | 10.5 | 8.5 | 0.91 | 1129 | 56 | 476 | 2 |
| Comparative Example3 | (A-1) | 90 | 17.6 | 2.6 | 1.21 | 615 | 553 | (B'-1) | 10 | 10.5 | 8.5 | 0.91 | 1129 | 113 | 528 | 2 |
| Comparative Example4 | (A-2) | 100 | 17.1 | 1.9 | 1.19 | 49 | 49 | - | - | - | - | - | - | - | 49 | 1 |
| Comparative Examples | (A-2) | 93 | 17.1 | 1.9 | 1.19 | 49 | 46 | - | - | - | - | - | - | - | 51 | 2 |
| | (A-4) | 7 | 10.3 | 4.6 | 0.89 | 541 | 38 | | | | | | | | | |
| Comparative Example6 | (A-2) | 95 | 17.1 | 1.9 | 1.19 | 49 | 47 | (B-6) | 5 | 9.5 | 9.1 | 0.77 | 5585 | 279 | 295 | 2 |
| Comparative Example7 | (A-3) | 100 | 17.8 | 2.4 | 1.22 | 106 | 106 | - | - | - | - | - | - | - | 106 | 1 |

(continued)

| | | Carbon material(A) | | | | | | Carbon material(B) | | | | | | | Carbon material | |
| | Type | Content rate C(A) [mass%] | Average-particle size [μm] | Specific surface area [m²/g] | Tap density [g/cm³] | Ne(A) [Number] | Nem(A) [Number] | Type | Content rate C(B) [mass%] | Average-particle size [μm] | Specific surface area [m²/g] | Tap density [g/cm³] | Ne(B) [Number] | Nem(B) [Number] | Ne [Number] | Number of peaks [Number] |
|---|---|---|---|---|---|---|---|---|---|---|---|---|---|---|---|---|
| Comparative Examples | (A-3) | 93 | 17.8 | 2.4 | 1.22 | 106 | 98 | - | - | - | - | - | - | - | 74 | 2 |
| | (A-4) | 7 | 10.3 | 4.6 | 0.89 | 541 | 38 | | | | | | | | | |

<Manufacture of lithium-ion secondary battery>

Using this graphite as a negative electrode active material, a lithium-ion secondary battery was manufactured as follows.

(Preparation of negative electrode)

The carbon material shown in Table 2 was used as the negative electrode active material. 100 parts by mass of the carbon material was added with 1 part by mass of sodium carboxymethylcellulose as a thickener and 1 part by mass of an aqueous dispersion of styrene-butadiene rubber (styrene-butadiene rubber concentration: 40% by mass) as a binder, and they were mixed by a twin-screw kneader to form a slurry. The obtained slurry was applied to one side of a rolled copper foil having a thickness of 10 $\mu$m, dried, and rolled using a press. This was cut into a piece including a negative electrode active material layer having a width of 30 mm and a length of 40 mm and an uncoated part as a current collector tab welding part. The piece was used as a negative electrode. The thickness of the negative electrode active material layer on the piece was about 60 $\mu$m, and the density of the carbon material was 1.60 to 1.70 g/cm$^3$.

(Preparation of positive electrode)

The positive electrode active material was a lithium transition metal composite oxide synthesized by the method shown below, and was represented by the composition formula $LiMn_{0.33}Ni_{0.33}Co_{0.33}O_2$.

$Mn_3O_4$ as a manganese raw material, NiO as a nickel raw material, and $Co(OH)_2$ as a cobalt raw material were weighed to obtain a starting material consisting of these so that the molar ratio of the starting material was Mn:Ni:Co=1:1:1. Pure water was added to this starting material to form a slurry. The slurry was stirred and the solid material in the slurry was wet-pulverized using a circulating medium stirring wet bead mill so that the volume-based average particle size d50 was 0.2 $\mu$m.

The obtained slurry was spray-dried using a spray dryer to obtain approximately spherical granulated particles having a particle size of approximately 5 $\mu$m, consisting only of manganese raw materials, nickel raw materials, and cobalt raw materials. LiOH powder having a volume-based average particle size d50 of 3 $\mu$m was added to the obtained granulated particles so that the ratio of the number of moles of Li to the total number of moles of Mn, Ni, and Co was 1.05. Thereafter, they were mixed in a high-speed mixer to obtain a mixed powder of granulated particles of the nickel raw material, cobalt raw material, and manganese raw material, and the lithium raw material. This mixed powder was calcined at 950 °C for 12 hours under air flowing condition (rising/lowering temperature 5°C/min). Calcined product thus obtained was crushed and passed through a sieve having 45 um openings to obtain a positive electrode active material. This positive electrode active material had a BET specific surface area of 1 m$^2$/g, an average primary particle size of 1 $\mu$m, a volume-based average particle size d50 of 8 $\mu$m, and a tap density of 1.7 g/cm$^3$.

85% by mass of the above-described positive electrode active material, 10% by mass of acetylene black as a conductive agent, and 5% by mass of polyvinylidene fluoride (PVdF) as a binder were mixed in an N-methylpyrrolidone solvent to form a slurry. The obtained slurry was applied to a 15 $\mu$m thick aluminum foil, dried, and rolled to a thickness of 100 $\mu$m using a press. This was cut into a piece including a positive electrode active material layer having a width of 30 mm and a length of 40 mm, and an uncoated part for a current collection, to obtain a positive electrode. The density of the obtained positive electrode active material layer was 2.6 g/cm$^3$.

(Preparation of electrolyte)

Thoroughly dried lithium hexafluorophosphate (LiPF$_6$) was dissolved at a concentration of 1 mol/L in a mixture of ethylene carbonate (EC) and ethyl methyl carbonate (EMC) (volume ratio 3:7) under an inert atmosphere. Furthermore, 2% by mass vinylene carbonate (VC) was added thereto and used as an electrolyte.

(Manufacture of battery)

One positive electrode and one negative electrode were arranged so that their active material surfaces faced each other, and a porous polyethylene sheet separator (20 $\mu$m thick) was sandwiched between the electrodes. At this time, the surfaces were made to face each other so that the surface of the positive electrode active material did not come off the surface of the negative electrode active material. A current collector tab was welded to the uncoated portion of each of the positive electrode and negative electrode to form an electrode body. A laminate sheet (total thickness: 0.1 mm) in which a polypropylene film, an aluminum foil having a thickness of 0.04 mm, and a nylon film were laminated in this order was prepared. The obtained electrode body was sandwiched between the laminate sheets so that each polypropylene film was on the inner surface. The area without the electrodes was then heat sealed, except for one portion for injecting the electrolyte. Thereafter, 235 μL of the non-aqueous electrolyte was injected into the active material layer to sufficiently saturate the electrode. Thereafter, the cell was sealed to produce a laminate cell. The rated capacity of this battery was 33 mAh.

<Evaluation of battery performance>

The capacity retention rate after 500 cycles and the DCR retention rate after 500 cycles of the prepared lithium-ion secondary batteries were measured using the following methods, and the results are shown in Table 2.

(Measurement of capacity retention rate after 15 cycles)

Initial conditioning was performed in an environment of 25°C, a voltage range of 4.2 to 3.0V, and a current value of 0.2C. (1C is the current value for discharging the rated capacity in 1 hour based on the discharge capacity at a 1 hour rate. The same applies hereinafter.) Furthermore, after aging at 60°C, a cycle test was conducted in an environment of 45°C under the conditions of a charging current value of 0.8 C and a discharging current value of 0.8 C. Using the discharge capacity of the first cycle as a reference, the capacity retention rate after 15 cycles was calculated from the discharge capacity of the 15th cycle according to the following formula.

Capacity retention rate after 15 cycles = (15th cycle discharge capacity / 1st cycle discharge capacity) $\times$ 100

(Measurement of capacity retention rate after 500 cycles)

Similarly to the measurement of the capacity retention rate after 15 cycles, the capacity retention rate after 500 cycles was calculated from the discharge capacity at the 500th cycle using the discharge capacity at the 1st cycle as a reference according to the following formula.

Capacity retention rate after 500 cycles = (500th cycle discharge capacity / 1st cycle discharge charge) $\times$ 100

(Measurement of DCR retention rate after 500 cycles)

In the above measurement of capacity retention rate after 500 cycles, the DCR (Direct Current Resistance) before the cycle (initial DCR) and the DCR after 500 cycles were measured by the following method, and the DCR retention rate after 500 cycles was calculated according to the following formula.

DCR retention rate after 500 cycles (%) = (DCR after 500 cycles / initial DCR) $\times$ 100

The battery was adjusted in advance to SOC 50% (state of charge) in a -30°C environment. This battery was discharged for 10 seconds at current values of 0.2C, 0.5C, 1.0C, 2.0C, and 3.0C, respectively, and the amount of voltage drop after 10 seconds of discharge was measured. DCR ($\Omega$) was calculated from the slope of the voltage drop (V)-current value (A) curve obtained from this measurement result.

Table 2 shows the evaluation results of the battery performance of the carbon materials prepared in each Examples and Comparative Examples, and also lists the specific surface area, volume-average particle size (d50), tap density, and peak position.

[Table 2]

| | Carbon material | | | | | | | Initial | After 15 cycles | After 550 cycles | | |
|---|---|---|---|---|---|---|---|---|---|---|---|---|
| | Ne [Number] | Number of peaks [Number] | Peak position [$\mu$m] | | Specific surface area [m²/g] | d50 [$\mu$ml] | Tap density [g/cm³] | DCR [$\Omega$] | Capacity retention rate [%] | DCR [$\Omega$] | DCR retention rate [%] | Capacity retention rate [%] |
| Example1 | 2275 | 2 | 2.2 | 14.2 | 2.7 | 17.6 | 1.2 | 34.8 | 99.1 | 55.9 | 160.4 | 91.6 |
| Example2 | 4270 | 2 | 1.2 | 13.8 | 3.0 | 17.2 | 1.2 | 36.6 | 99.1 | 58.0 | 158.5 | 92.2 |
| Example3 | 4095 | 2 | 0.9 | 15.0 | 2.5 | 16.2 | 1.2 | 42.7 | 99.3 | 58.3 | 136.5 | 91.2 |
| Example4 | 765 | 2 | 4.4 | 13.4 | 2.7 | 16.7 | 1.2 | 31.3 | 99.2 | 52.7 | 168.6 | 91.2 |
| Example5 | 2220 | 2 | 2.3 | 12.3 | 2.2 | 16.6 | 1.2 | 38.7 | 99.2 | 53.7 | 138.7 | 92.0 |
| Example6 | 3108 | 2 | 2.5 | 11.3 | 2.5 | 16.4 | 1.2 | 40.2 | 99.2 | 52.4 | 130.4 | 91.0 |
| Example7 | 2423 | 2 | 1.7 | 15.5 | 2.5 | 17.3 | 1.2 | 38.8 | 99.4 | 56.4 | 145.3 | 92.7 |
| Example8 | 1934 | 2 | 3.6 | 14.6 | 2.5 | 16.2 | 1.2 | 38.6 | 99.7 | 58.3 | 151.1 | 95.0 |
| Example9 | 4167 | 2 | 3.0 | 12.3 | 3.6 | 16.3 | 1.2 | 39.0 | 99.5 | 56.4 | 144.4 | 93.8 |
| Comparative Example1 | 615 | 1 | 14.2 | | 2.3 | 17.7 | 1.2 | 32.3 | 99.2 | 60.1 | 185.9 | 79.6 |
| Comparative Example2 | 476 | 2 | 0.7 | 15.5 | 2.7 | 17.3 | 1.2 | 36.6 | 99.1 | 59.2 | 161.6 | 61.0 |
| Comparative Example3 | 528 | 2 | 0.7 | 13.8 | 2.9 | 17.0 | 1.2 | 36.7 | 99.2 | 53.8 | 146.5 | 89.0 |
| Comparative Example4 | 49 | 1 | 12.7 | | 1.9 | 17.1 | 1.2 | 36.8 | 99.1 | 62.6 | 170.1 | 56.2 |
| Comparative Example5 | 51 | 2 | 5.0 | 11.6 | 2.0 | 16.5 | 1.2 | 38.5 | 99.0 | 54.5 | 141.6 | 86.4 |
| Comparative Example6 | 295 | 2 | 3.5 | 11.0 | 2.1 | 16.6 | 1.2 | 38.3 | 99.2 | 54.2 | 141.5 | 90.1 |
| Comparative Example7 | 106 | 1 | 14.2 | | 2.4 | 17.8 | 1.2 | 33.3 | 99.3 | 58.3 | 174.9 | 76.7 |
| Comparative Example8 | 74 | 2 | 4.9 | 12.0 | 2.3 | 17.0 | 1.2 | 36.1 | 99.2 | 50.2 | 139.1 | 89.4 |

From Tables 1 and 2, the secondary battery having excellent cycle characteristics, excellent capacity retention rate after 500 cycles and excellent DCR retention rate after 500 cycles is provided by using the carbon material of the present invention having the number of peaks in the particle size distribution of 2 or more, the number of particles Ne of 700 or more, and the specific surface area of 10 m / g or less, as a negative electrode active material.

Although the present invention has been described in detail using specific embodiments, it will be apparent to those skilled in the art that various changes can be made without departing from the spirit and scope of the present invention.

This application is based on Japanese Patent Application No. 2021-176633 filed on October 28, 2021, and the entire of which is incorporated herein by reference.

**Claims**

1. A carbon material wherein a number of peaks in the particle size distribution obtained from flow type-particle image analysis is 2 or more, a number of particles Ne calculated by the following formula (1) is 700 or more, and a specific surface area is 10 m$^2$/g or less.

$$Ne = No \times F \qquad (1)$$

(In formula (1), No is a number of particles of the carbon material obtained from the flow type-particle image analysis. F (%) is a particle frequency of the carbon material having a particle size of less than 3 um obtained from the flow type-particle image analysis.)

2. The carbon material according to claim 1, wherein the number of Ne is 1500 or more.

3. The carbon material according to claim 1 or 2, wherein Ne is 100,000 or less.

4. The carbon material according to any one of claims 1 to 3, having a specific surface area of 1 m$^2$/g or more.

5. The carbon material according to any one of claims 1 to 4, having a volume-average particle size of 8 $\mu$m or more.

6. The carbon material according to any one of claims 1 to 5, having a tap density of 0.60 g/cm$^3$ to 1.80 g/cm$^3$.

7. The carbon material according to any one of claims 1 to 6, wherein at least one of the peaks exists in a range of 10 $\mu$m to 25 $\mu$m.

8. The carbon material according to any one of claims 1 to 7, wherein at least one of the peaks exists in a range of 1 $\mu$m to 5 $\mu$m.

9. The carbon material according to any one of claims 1 to 8, comprising a carbon material (A) having Ne(A) of 10 to 1000 and a carbon material (B) having Ne(B) of 3000 to 300000. (Ne(A) is a number of particles of the carbon material (A) calculated by the following formula (2), and Ne(B) is a number of particles of the carbon material (B) calculated by the following formula (3). In the formula (2), No(A) is a number of particles of the carbon material (A) obtained from the flow type-particle image analysis. F(A) (%) is a particle frequency of the carbon material (A) having a particle size of less than 3 $\mu$m obtained from the flow type-particle image analysis. No(B) is a number of particles of the carbon material (B) obtained from the flow type-particle image analysis. F(B) (%) is a particle frequency of the carbon material (B) having a particle size of less than 3 $\mu$m obtained from the flow type-particle image analysis.)

$$Ne(A) = No(A) \times F(A) \qquad (2)$$

$$Ne(B) = No(B) \times F(B) \qquad (3)$$

10. The carbon material according to claim 9, wherein Ne(B) is 10,000 or more.

11. The carbon material according to claim 9 or 10, wherein the content of the carbon material (B) is 1% by mass or more and to 30% by mass or less based on 100% by mass of the carbon material.

**12.** The carbon material according to any one of claims 9 to 11, wherein the carbon material (B) has a tap density of 0.50 g/cm³ or less.

**13.** The carbon material according to any one of claims 1 to 12, wherein the carbon material is used in a secondary battery.

**14.** A method for producing the carbon material according to any one of claims 1 to 13, comprising a step of mixing a carbon material having Ne(A) of 10 to 1000 and a carbon material (B) having Ne(B) of 3000 to 300000. (Ne(A) is a number of particles of the carbon material (A) calculated by the following formula (2), and Ne(B) is a number of particles of the carbon material (B) calculated by the following formula (3). In the formula (2), No (A) is a number of particles of the carbon material (A) obtained from the flow type-particle image analysis. F(A) (%) is a particle frequency of the carbon material (A) having a particle size of less than 3 μm obtained from the flow type-particle image analysis. No(B) is a number of particles of the carbon material (B) obtained from the flow type-particle image analysis. F(B) (%) is a particle frequency of the carbon material (B) having a particle size of less than 3 um obtained from the flow type-particle image analysis.)

$$Ne(A) = No(A) \times F(A) \qquad (2)$$

$$Ne(B) = No(B) \times F(B) \qquad (3)$$

**15.** A secondary battery including a positive electrode, a negative electrode, and an electrolyte,

wherein the negative electrode comprises a current collector and a negative electrode active material layer disposed on the current collector, and
wherein the negative electrode active material layer contains the carbon material according to any one of claims 1 to 13.

**16.** A method for manufacturing a secondary battery including a positive electrode, a negative electrode, and an electrolyte,
Wherein the method comprises a step of forming a negative electrode active material layer containing the carbon material according to any one of claims 1 to 13 on a current collector to produce the negative electrode.

## INTERNATIONAL SEARCH REPORT

| International application No. |
| --- |
| **PCT/JP2022/037832** |

### A. CLASSIFICATION OF SUBJECT MATTER

***C01B 32/20***(2017.01)i; ***H01M 4/36***(2006.01)i; ***H01M 4/587***(2010.01)i
FI: C01B32/20; H01M4/587; H01M4/36 D

According to International Patent Classification (IPC) or to both national classification and IPC

### B. FIELDS SEARCHED

Minimum documentation searched (classification system followed by classification symbols)

C01B32/20; H01M4/36; H01M4/587

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2016-91632 A (HITACHI MAXELL) 23 May 2016 (2016-05-23)<br>paragraphs [0074]-[0100] | 1-16 |
| A | JP 2013-201104 A (MITSUBISHI CHEMICALS CORP) 03 October 2013 (2013-10-03)<br>entire text | 1-16 |
| A | WO 2017/057123 A1 (NEC ENERGY DEVICES LTD) 06 April 2017 (2017-04-06)<br>entire text | 1-16 |

☐ Further documents are listed in the continuation of Box C.    ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **15 December 2022** | **27 December 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/037832**

| Patent document cited in search report | | | Publication date (day/month/year) | Patent family member(s) | | | Publication date (day/month/year) |
|---|---|---|---|---|---|---|---|
| JP | 2016-91632 | A | 23 May 2016 | (Family: none) | | | |
| JP | 2013-201104 | A | 03 October 2013 | WO | 2012/133699 | A1 | |
| | | | | CN | 103477476 | A | |
| | | | | KR | 10-2014-0006967 | A | |
| WO | 2017/057123 | A1 | 06 April 2017 | US | 2018/0241038 | A1 | |
| | | | | entire text | | | |
| | | | | EP | 3358653 | A1 | |
| | | | | CN | 108028362 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013201104 A

- JP 2021176633 A